(19) Europäisches Patentamt
European Patent Office
Office européen des brevets

(11) **EP 0 846 405 B1**

(12) **EUROPÄISCHE PATENTSCHRIFT**

(45) Veröffentlichungstag und Bekanntmachung des Hinweises auf die Patenterteilung:
**23.06.2010 Patentblatt 2010/25**

(51) Int Cl.:
*H04S 3/00* (2006.01)    *H04B 1/66* (2006.01)
*H04N 7/32* (2006.01)    *G10L 19/00* (2006.01)

(21) Anmeldenummer: **96920738.0**

(22) Anmeldetag: **03.07.1996**

(86) Internationale Anmeldenummer:
**PCT/DE1996/001181**

(87) Internationale Veröffentlichungsnummer:
**WO 1997/004621 (06.02.1997 Gazette 1997/07)**

(54) **VERFAHREN ZUR REDUNDANZREDUKTION BEI DER CODIERUNG VON MEHRKANALIGEN SIGNALEN UND VORRICHTUNG ZUR DEKODIERUNG VON REDUNDANZREDUZIERTEN, MEHRKANALIGEN SIGNALEN**

PROCESS FOR REDUCING REDUNDANCY DURING THE CODING OF MULTICHANNEL SIGNALS AND DEVICE FOR DECODING REDUNDANCY-REDUCED MULTICHANNEL SIGNALS

PROCEDE POUR REDUIRE LA REDONDANCE LORS DU CODAGE DE SIGNAUX MULTICANAUX ET DISPOSITIF POUR DECODER DES SIGNAUX MULTICANAUX A REDONDANCE REDUITE

(84) Benannte Vertragsstaaten:
**CH DE ES FR GB IT LI SE**

(30) Priorität: **20.07.1995 DE 19526366**

(43) Veröffentlichungstag der Anmeldung:
**10.06.1998 Patentblatt 1998/24**

(73) Patentinhaber: **ROBERT BOSCH GMBH**
**70442 Stuttgart (DE)**

(72) Erfinder:
• **EDLER, Bernd**
  **D-30419 Hannover (DE)**
• **FUCHS, Hendrik**
  **D-30177 Hannover (DE)**

(56) Entgegenhaltungen:
**WO-A-90/16136      DE-A- 4 320 990**
**US-A- 4 815 132**

• **94TH AES CONVENTION, PREPRINT 3584 (K1-9), März 1993, BERLIN, Seiten 1-26, XP000607767 P. CAMBRIDGE AND M. TODD: "AUDIO DATA COMPRESSION TECHNIQUES" in der Anmeldung erwähnt**

**Beschreibung**

Stand der Technik

Die Erfindung geht aus von einem Verfahren zur Redundanzreduktion bei der Codierung von mehrkanaligen Signalen und Vorrichtung zur Decodierung von redundanzreduzierten Signalen.

Es ist schon ein Verfahren zur Redundanzreduktion bei der Codierung von mehrkanaligen Signalen aus der DE 43 20 990 A1 bekannt. Darin wird die Codierung von zweikanaligen Stereo-Tonsignalen beschrieben. Zur Redundanzreduktion werden die Signale abgetastet, quantisiert und im Encoder prädiziert. Es ergeben sich Schätzwerte für die aktuellen Abtastwerte. Es wird der Prädiktionsfehler ermittelt und für eine Übertragung über eine Datenleitung bereitgestellt. Die Prädiktion ist eine Adaptive-Inter-Kanal-Prädiktion. D.h. es werden die statistischen Abhängigkeiten zwischen den Signalen in den beiden Kanälen (Kreuzkorrelation) ausgenutzt. Die Prädiktorkoeffizienten müssen hier als Seiteninformation zum Empfänger übertragen werden.

Aus der US-A-4815132 ist ein Verfahren bekannt zur Redundanzreduktion bei der Codierung von zweikanaligen Signalen, die bereits in digitalisierter Form vorliegen. Die digitalisierten Signale werden prädiziert, wobei ein Prädiktionsfehler zwischen den digitalisierten und prädizierten Signalen ermittelt wird. Die Prädiktionsfehlerwerte werden quantisiert und zur Übertragung über eine Übertragungsstrecke bereitgestellt. Die Prädiktion wird linear und rückwärtsadaptiv für zwei Kanäle gleichzeitig ausgeführt, wobei sowohl die statistischen Abhängigkeiten innerhalb eines Kanals als auch zwischen zwei Kanälen berücksichtigt werden. Weiter ist es aus der US-A-4815132 bekannt, einen linearen rückwärtsadaptiven Prädiktor zu verwenden, dem die quantisierten Prädiktionswerte zweier Kanäle zugeführt werden.

Aus der WO-A-9016136 sind Prädiktoren mit Kreuzgliedstruktur an sich bekannt.

Ein rückwärtsadaptiver Prädiktor für den 1-Kanal-Fall ist aus N.S. Jayant, P. Noll, "Digital coding of waveforms", Prentice-Hall, Englewood Cliffs, New Jersey, 1984 bekannt.

In P. Cambridge, M. Todd, "Audio Data Compression Techniques", 94th AES convention, preprint 3584 (K1-9), Berlin, März 1993 wird die Möglichkeit erwähnt für einen Prädiktor für 2 Stereo-Kanäle Autokorrelationen und Kreuzkorrelationen auszunutzen. Eine Lösungsmöglichkeit wird dafür aber nicht angegeben.

Vorteile der Erfindung

Das erfindungsgemäße Verfahren mit den Merkmalen des Anspruchs 1 hat den Vorteil, daß die Codierung durch eine Prädiktion in keinem Fall verschlechtert werden kann. Ein weiterer Vorteil ist, daß die Prädiktion linear und rückwärtsadaptiv für mindestens zwei Kanäle gemeinsam ausführbar ist, wobei die statistischen Bindungen nicht nur zwischen den Kanälen ausgenutzt werden sondern auch die statistischen Bindungen innerhalb jedes einzelnen Kanals berücksichtigt werden. Dadurch wird erreicht, daß die Qualität der Prädiktion verbessert ist und in vielen Signalbereichen ein erhöhter Prädiktionsgewinn ermöglicht wird. Z.B. bei der Codierung von Tonsignalen mit einer Datenrate von 64 kbit/s läßt sich so eine deutliche Erhöhung der Qualität der übertragenen Signale erreichen.

Die Erfindung betrifft Prädiktoren ganz allgemein für den N-Kanal-Fall, d.h., mit einem solchen Prädiktor kann mehr als ein Kanal gleichzeitig prädiziert werden, wobei die statistischen Bindungen sowohl innerhalb jedes einzelnen Kanals (Autokorrelationen) als auch zwischen den Kanälen (Kreuzkorrelationen) ausgenutzt. Gegenüber dem 1-Kanal-Fall, bei dem nur Autokorrelationen ausgenutzt werden, ist so ein deutlicher Prädiktionsgewinn zu erzielen.

Dadurch, daß die Prädiktion rückwärtsadaptiv ausgeführt wird, ist es möglich die Prädiktorkoeffizienten aus den bereits übertragenen Werten zu berechnen, so daß die Prädiktorkoeffizienten nicht übertragen werden müssen. Dies ist bei vorwärtsadaptiven Prädiktoren nicht möglich. Dort müßten auch die Prädiktorkoeffizienten zum Empfänger übertragen werden, was zu einer Erhöhung des Datenübertragungsaufwandes führen würde.

Durch die Maßnahmen der Erfindung läßt sich die Prädiktion der Signale mehrstufig auslegen, wobei für jede Prädiktorstufe eine Kreuzgliedstruktur verwendet wird. Dadurch ergibt sich, daß auf diese Weise, zumindest im Fall stationärer Signale, ein Orthogonalsystem aufgebaut wird, das es erlaubt eine einfache Variation der Prädiktorordnung durchzuführen, da das Hinzufügen einer weiteren Stufe die vorherigen Stufen nicht beeinflußt. Es kann daher für den konkreten Anwendungsfall der jeweils optimale Prädiktor hinsichtlich Rechenaufwand und Prädiktionsqualität ausgesucht werden.

Zur adaptiven Berechnung der Prädiktorkoeffizienten wird eine Minimierung der Summe der Fehlersignalleistungen der Kanäle durchgeführt. Dazu werden Erwartungswerte für die Fehlersignale in mindestens zwei Kanälen benötigt. Dabei ist es vorteilhaft, wenn die Erwartungswerte durch Mittelwerte über bestimmte Signalvergangenheiten ersetzt werden. Hierdurch wird der Rechenaufwand stark verringert.

Sehr vorteilhaft ist es, wenn einzelne Stufen des Prädiktors abschaltbar ausgeführt werden. Dadurch kann der Prädiktor flexibel reagieren, wenn z.B. eine Instabilität bei der Prädiktion auftritt. Dies kann bei rückwärtsadaptiven Systemen ggfs. dann vorkommen, wenn sich die Signalstatistik aufgrund eines Signalwechsels ändert.

Ebenfalls vorteilhaft ist, wenn die abgeschalteten Stufen in Vorwärtsrichtung rückwärtsadaptiv weiter betrieben werden. Dadurch wird erreicht, daß die Prädiktorkoeffizienten auch der abgeschalteten Stufen weiter adaptiert werden, so daß nach Wiederzuschaltung der abgeschalteten Stufen die entsprechenden Prädiktorkoeffizienten nicht vollständig neu adaptiert werden müssen.

Weiterhin vorteilhaft ist, wenn auch die statistischen Abhängigkeiten zwischen zeitgleichen Abtastwerten in den mindestens zwei Kanälen (Kreuzkorrelationen) ausgenutzt werden. Hierfür kann ein einfacher Inter-Kanal-Prädiktor nullter Ordnung nachgeschaltet werden. Dies bringt z.B. bei der Codierung von Tonsignalen, insbesondere für monoartige Signale, einen Prädiktionsgewinn, wenn sich bspw. die Signale in den Kanälen nur in der Amplitude unterscheiden.

Darüber hinaus ist es sehr vorteilhaft, wenn eine spektrale Zerlegung der mehrkanaligen Signale in eine Anzahl von Spektralkomponenten z.B. mittels einer Filterbank oder einer Transformation vorgenommen wird und die so entstehenden mehrkanaligen Spektralkomponenten separat codiert werden, wobei die Prädiktion jeweils separat für die Spektralkomponenten der mindestens zwei Kanäle durchgeführt wird. Dies hat den Vorteil, daß eine flexible und effiziente Steuerung der Prädiktoren möglich wird. Wenn in einem Teilband keine Signalanteile vorhanden sind, oder die Prädiktion keine Gewinne erzielt, kann der entsprechende Prädiktor abgeschaltet werden. Auch ist die Realisierung mehrerer Prädiktoren geringerer Ordnung für schmalbandige Signalkomponenten oft einfacher, als die Realsierung eines breitbandigen Prädiktors höherer Ordnung.

Vorteilhafte Maßnahmen für eine Vorrichtung zur Dekodierung von redundanzreduzierten Signalen, sind in den Ansprüchen 8 bis 10 angegeben.

Zeichnung

Vier Ausführungsbeispiele der Erfindung sind in der Zeichnung dargestellt und in der nachfolgenden Beschreibung näher erläutert. Es zeigen

Figur 1 ein Blockschaltbild eines N-Kanalcodec mit N-Kanal-Prädiktion;
Figur 2 den Aufbau eines rückwärtsadaptiven N-Kanal-Prädiktors der Ordnung P mit Kreuzgliedstruktur;
Figur 3 eine einzelne Stufe des N-Kanal-Prädiktors nach Figur 2;
Figur 4 eine vereinfachte schematische Darstellung eines rückwärtsadaptiven Stereo-Prädiktors der Ordnung P in Kreuzgliedstruktur;
Figur 5 eine vereinfachte schematische Darstellung eines rückwärtsadaptiven Stereo-Prädiktors der Ordnung P in Kreuzgliedstruktur mit zusätzlicher Berücksichtigung der Korrelation zwischen zeitgleichen Abtastenwerten der beiden Signale;
Figur 6 ein Blockschaltbild eines N-Kanal-Teilbandcodierers mit N-Kanal-Prädiktor und
Figur 7 einen rückwärtsadaptiven N-Kanal-Prädiktor in Kreuzgliedstruktur mit Umschaltmöglichkeit der Prädiktorordnung und fortlaufender vollständiger Adaption alter Prädiktorstufen.

Beschreibung der Erfindung

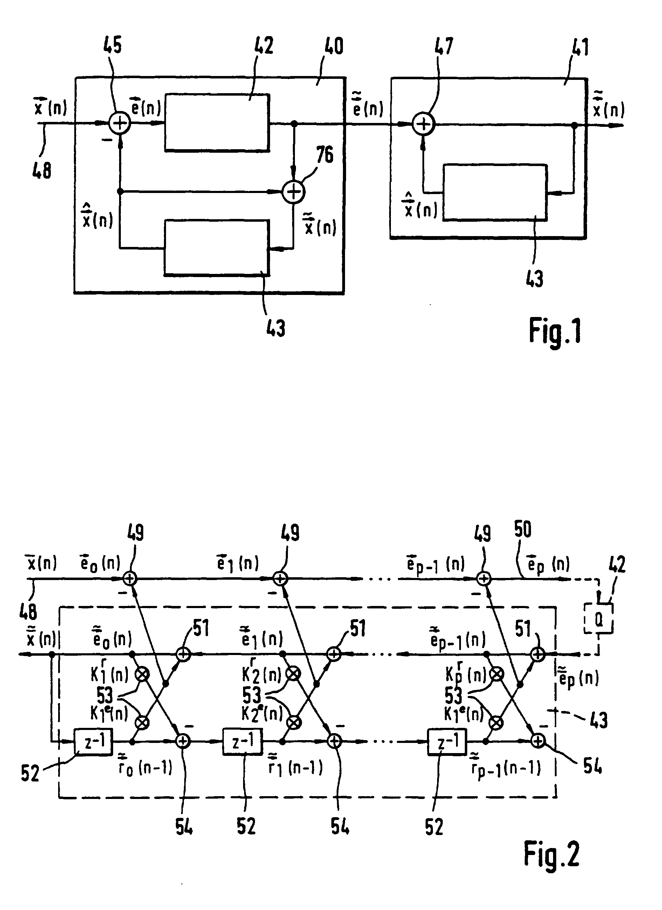

In Figur 1 bezeichnet die Bezugszahl 40 einen Encoder. Diesem wird bei dem Eingang 48 ein mehrkänaliges Eingangssignal $\vec{x}(n)$ zugeführt. Dabei ist n eine natürliche Zahl und gibt den n-ten Abtastzeitpunkt des analogen Eingangssignals $\vec{x}$ an. Der Encoder 40 enthält weiterhin einen N-Kanal-Quantisierer 42 und einen N-Kanal-Prädiktor 43. Von dem Eingangssignal $\vec{x}(n)$ wird an der Summationsstelle 45 das Prädiktorausgangssignal $\hat{\vec{x}}(n)$ abgezogen. Es entsteht das Prädiktionsfehlersignal $\vec{e}(n)$. Dieses wird dem N-Kanal-Quantisierer 42 zugeführt. Am Ausgang des N-Kanal-Quantisierers 42 erscheint dann das quantisierte Prädiktionsfehlersignal $\tilde{\vec{e}}(n)$. Dieses wird im Encoder 40 an der Summationsstelle 46 zu dem Prädiktorausganassignal $\hat{\vec{x}}(n)$ addiert. Dadurch entsteht das quantisierte Signal $\tilde{\vec{x}}(n)$ für den N-Kanal-Prädiktor. Am Ausgang des Encoders 40 steht das quantisierten Prädiktionsfehlersignal $\tilde{\vec{e}}(n)$ an. Dieses wird über eine Übertragungsstrecke übertragen und schließlich einem Eingang des Decoders 41 zugeführt. Der Decoder 41 enthält ebenfalls einen N-Kanal-Prädiktor 43. Dieser ist genauso aufgebaut, wie der N-Kanal-Prädiktor im Encoder 40. Das am Eingang anstehende quantisierte Prädiktionsfehlersignal wird einer Summationsstelle 47 zu dem ausgegebenen Prädiktorausgangssignal $\tilde{\vec{x}}(n)$ des N-Kanal-Prädiktors addiert. Es entsteht dadurch das quantisierte Signal $\tilde{\vec{x}}(n)$. Dieses wird auch dem Eingang des N-Kanal-Prädiktors 43 zugeführt. Nach Einschaltung des Decoders 41 findet zuerst ein Einschwingvorgang statt, bei dem die ausgegebenen Prädiktorausgangssignale $\hat{\vec{x}}(n)$ noch nicht mit denjenigen des N-Kanal-Prädiktors 43 innerhalb des Encoders 40 übereinstimmen. In dieser Phase sollte das abgegebene quantisierte Signal $\bar{\tilde{x}}(n)$ noch unterdrückt werden. Nach dem Einschwingvorgang werden beide Prädiktorausgangssignale jedoch aufgrund der Konvergenz der Berechnungsgleichungen automatisch übereinstimmen.

Zur Schreibweise der genannten Signale wird noch folgendes angemerkt. Die genannten Signale sind als Vektorsignale geschrieben. Die Vektoren entsprechen einem N-Kanal-Signal. Dabei stellen

$$\vec{x}(n) = \begin{bmatrix} x_1(n) \\ x_2(n) \\ \vdots \\ x_N(n) \end{bmatrix}, \quad \hat{\vec{x}}(n) = \begin{bmatrix} \hat{x}_1(n) \\ \hat{x}_2(n) \\ \vdots \\ \hat{x}_N(n) \end{bmatrix}, \quad \bar{\vec{x}}(n) = \begin{bmatrix} \bar{x}_1(n) \\ \bar{x}_2(n) \\ \vdots \\ \bar{x}_N(n) \end{bmatrix} \tag{1}$$

das N-Kanal-Eingangssignal, das N-Kanal-Prädiktorausgangssignal und das quantisierte N-Kanal-Signal sowie

$$\vec{e}(n) = \begin{bmatrix} e_1(n) \\ e_2(n) \\ \vdots \\ e_N(n) \end{bmatrix}, \quad \bar{\vec{e}}(n) = \begin{bmatrix} \bar{e}_1(n) \\ \bar{e}_2(n) \\ \vdots \\ \bar{e}_N(n) \end{bmatrix} \tag{2}$$

das N-Kanal-Prädiktionfehlersignal und das quantisierte Prädiktionsfehlersignal dar.

Im folgenden wird näher auf die Berechnung des Prädiktorausgangssignals eingegangen. Der N-Kanal-Prädiktor 43 besitzt die Ordnung P und wird durch die P-Matrizen der Prädiktorkoeffizienten

$$A_m(n) = \begin{bmatrix} a_{11,m}(n) & a_{12,m}(n) & \cdots & a_{1N,m}(n) \\ a_{21,m}(n) & a_{22,m}(n) & \cdots & a_{2N,m}(n) \\ \vdots & \vdots & \vdots & \vdots \\ a_{N1,m}(n) & a_{N2,m}(n) & \cdots & a_{NN,m}(n) \end{bmatrix}, \quad 1 \leq m \leq P \tag{3}$$

beschrieben. Dabei sind m und P natürliche Zahlen. Für die Berechnung des Prädiktorausgangssignals $\hat{\vec{x}}(n)$, also der Schätzwerte für den jeweils aktuellen Abtastwert in jedem Kanal gilt dann:

$$\hat{\vec{x}}(n) = \sum_{m=1}^{P} A_m(n) \cdot \bar{\vec{x}}(n-m) \tag{4}$$

Das N-Kanal-Prädiktionsfehlersignal $\vec{e}(n)$ berechnet sich dann gemäß

$$\vec{e}(n) = \vec{x}(n) - \hat{\vec{x}}(n). \tag{5}$$

Für das quantisierte Prädiktionsfehlersignal gilt

$$\bar{\bar{e}}(n) = \bar{e}(n) + \vec{q}(n) \tag{6}$$

und für das quantisierte Eingangssignal folgt dann

$$\bar{\bar{x}}(n) = \hat{\bar{x}}(n) + \bar{\bar{e}}(n) = \vec{x}(n) + \vec{q}(n). \tag{7}$$

Dabei ist $\vec{q}(n)$ eine Art Quantisierungsfehlersignal, das jedoch für die Berechnung nicht weiterverwendet wird.
Die Berechnung der Prädiktorkoeffizienten in den Matrizen $A_m(n)$ erfolgt durch Minimierung der Summe der Prädiktionsfehlersignalleistungen

$$E\left[\vec{e}^{\,T}(n) \cdot \vec{e}(n)\right] \rightarrow min. \tag{8}$$

In Gleichung 8 ist $\vec{e}^{\,T}(n)$ der transponierte Vektor von $\vec{e}(n)$. Der Prädiktionsgewinn wird durch die folgende Formel angegeben.

$$G_{[dB]} = \sum_{i=1}^{N} 10 \cdot \log_{10} \frac{\sigma_{x_i}^{\,2}}{\sigma_{e_i}^{\,2}}, \tag{9}$$

In Gleichung 9 ist die Annahme gemacht, daß es sich um mittelwertfreie Signale handelt, bei denen also $\sigma_{xi}^2 = E\left[x_i^2(n)\right]$ und $\sigma_{ei}^2 = E\left[e_i^2(n)\right]$ gilt. $\sigma_{xi}^2$ und $\sigma_{ei}^2$ sind die Varianzen der entsprechenden Werte $x_i$ bzw. $e_i$.
Die Realisierung des N-Kanal-Prädiktors 43 wird nachfolgend im Zusammenhang mit Figur 2 erläutet. Dieser besitzt eine Kreuzgliedstruktur. Diese Struktur ist im Fall von Ein-Kanal-Prädiktoren bereits aus dem Stand der Technik bekannt. Diesbezüglich wird auf das Buch P. Strohbach "Linear Prediction Theory", Springer-Verlag, Seite 158 bis 178, 1990 verwiesen. Ein wesentlicher Vorteil der Kreuzgliedstruktur ist, daß bei dieser - zumindest im Falle stationärer Signale - ein Orthogonalsystem aufgebaut wird, welches eine einfache Variation der Prädiktorordnung durch Kaskadierung von Prädiktorbasisstufen ermöglicht, da das Hinzufügen einer weiteren Stufen die vorhergehenden Stufen nicht beeinflußt. Erfindungsgemäß wird diese Struktur auch auf den N-Kanal-Fall übertragen und im folgenden weiter erläutert.
Der in Figur 2 dargestellte N-Kanal-Prädiktor besteht aus P Stufen und besitzt damit die Ordnung P. An der linken Seite steht das N-Kanal-Eingangssignal $\vec{x}(n)$ an. Von diesem Signal werden bei den Summationsstellen 49 jeweils bestimmte Anteile subtrahiert. Werden die Subtraktionsanteile zusammengefaßt, so entsprechen diese Anteile dem in Figur 1 dargestellten Prädiktorausgangssignal $\hat{\bar{x}}(n)$. Am Ausgang 50 steht das Prädktionsfehlersignal $\vec{e}(n)$ an. Dieses wird wiederum dem N-Kanal-Quantisierer 42 zugeführt, der gestrichelt dargestellt ist. Nur der untere Teil 51 der dargestellten Struktur entspricht also dem Prädiktor 43. Bei den Summationsstellen 51 wird zu dem quantisierten Prädiktionsfehlersignal am Ausgang des N-Kanal-Quantisierers 42 ein Beitrag hinzuaddiert, der jeweils in einer Prädiktorstufe berechnet wurde. Zusammengefaßt ergeben diese Additionsvorgänge das quantisierte N-Kanal-Signal $\bar{\bar{x}}(n)$.

Dieses Signal wird auf den Eingang des N-Kanal-Prädiktors 43 gegeben, wie auch in Figur 1 dargestellt ist. Mit der Bezugszahl 52 sind Verzögerungsstufen bezeichnet, die jeweils den anstehenden Wert des Signals um ein Abtastintervall verzögern. Mit der Bezugszahl 53 sind Multiplikationsstellen bezeichnet, bei denen eine Multiplikation der entsprechenden Eingangsvektoren mit den Matrizen der sogenannten Reflexions- oder auch Parcor-Koeffizienten stattfindet. Bei den Summationsstellen 54 finden schließlich Additionen der entsprechend in Fig. 2 dargestellten Eingangsvektoren statt, die dann zu Hilfssignalen führen, die jedoch nur intern im N-Kanal-Prädiktor 43 verwendet werden. Zu beachten ist die vorzeichenrichtige Addition der entsprechenden Eingangsvektoren, wie im Bild dargestellt.

Als nächstes wird auf die mathematische Beschreibung dieser N-Kanal-Prädiktorstruktur sowie auf die Berechnung der Prädiktor-Koeffizienten, die auch als Reflexions- oder auch Parcor-Koeffizienten bezeichnet werden, eingegangen. Die m-te Stufe des N-Kanal-Prädiktors wird durch die Rekursionsgleichungen

$$\tilde{\tilde{e}}_m(n) = \tilde{\tilde{e}}_{m-1}(n) - K_m^e \cdot \tilde{\tilde{r}}_{m-1}(n-1) \tag{10}$$

$$\tilde{\tilde{r}}_m(n) = \tilde{\tilde{r}}_{m-1}(n-1) - K_m^r \cdot \tilde{\tilde{e}}_{m-1}(n)$$

mit den Vektoren

$$\tilde{\tilde{x}}(n) = \begin{bmatrix} \tilde{x}_1(n) \\ \tilde{x}_2(n) \\ \vdots \\ \tilde{x}_N(n) \end{bmatrix}, \qquad \tilde{\tilde{e}}_m(n) = \begin{bmatrix} \tilde{e}_{1,m}(n) \\ \tilde{e}_{2,m}(n) \\ \vdots \\ \tilde{e}_{N,m}(n) \end{bmatrix}, \qquad \tilde{\tilde{r}}_m(n) = \begin{bmatrix} \tilde{r}_{1,m}(n) \\ \tilde{r}_{2,m}(n) \\ \vdots \\ \tilde{r}_{N,m}(n) \end{bmatrix} \tag{11}$$

und den Matrizen der Reflexionskoeffizienten

$$K_m^e(n) = \begin{bmatrix} k_{11,m}^e(n) & k_{12,m}^e(n) & \cdots & k_{1N,m}^e(n) \\ k_{21,m}^e(n) & k_{22,m}^e(n) & \cdots & k_{2N,m}^e(n) \\ \vdots & \vdots & \vdots & \vdots \\ k_{N1,m}^e(n) & k_{N2,m}^e(n) & \cdots & k_{NN,m}^e(n) \end{bmatrix} \tag{12}$$

$$K_m^r(n) = \begin{bmatrix} k_{11,m}^r(n) & k_{12,m}^r(n) & \cdots & k_{1N,m}^r(n) \\ k_{21,m}^r(n) & k_{22,m}^r(n) & \cdots & k_{2N,m}^r(n) \\ \vdots & \vdots & \vdots & \vdots \\ k_{N1,m}^r(n) & k_{N2,m}^r(n) & \cdots & k_{NN,m}^r(n) \end{bmatrix} \tag{13}$$

beschrieben. Um den Zusammenhang mit Figur 2 zu verdeutlichen gilt folgendes:

$$\tilde{\tilde{e}}_0(n) = \tilde{\tilde{r}}_0(n) = \tilde{\tilde{x}}(n) \text{ und } \tilde{\tilde{e}}_P(n) = \tilde{\tilde{e}}(n).$$

Die Berechnung der Reflexions- bzw. Parcor-Koeffizienten erfolgt bei stationären Signalen durch Minimierung der Summe der N-Fehlersignalleitungen:

$$E\left[\tilde{\tilde{e}}_m^T\ (n)\ \cdot\ \tilde{\tilde{e}}_m\ (n)\right]\ \rightarrow\ Min. \qquad (14)$$

und

$$E\left[\tilde{\tilde{r}}_m^T\ (n)\ \cdot\ \tilde{\tilde{r}}_m\ (n)\right]\ \rightarrow\ Min. \qquad (15)$$

Die Minimierung erfolgt durch Nullsetzen der NxN partiellen Ableitungen nach den einzelnen Reflexionskoeffizienten. Es ergeben sich NxN Gleichungen für die NxN Elemente der Reflexionskoeffizienten-Matrix. Die nachfolgenden Berechnungen beschränken sich auf Gleichung 14, gelten aber auch entsprechend für Gleichung 15.

$$\begin{bmatrix} \dfrac{\partial}{\partial k^e_{11,m}} & \dfrac{\partial}{\partial k^e_{12,m}} & \cdots & \dfrac{\partial}{\partial k^e_{1N,m}} \\[2mm] \dfrac{\partial}{\partial k^e_{21,m}} & \dfrac{\partial}{\partial k^e_{22,m}} & \cdots & \dfrac{\partial}{\partial k^e_{2N,m}} \\[1mm] \vdots & \vdots & \ddots & \vdots \\[1mm] \dfrac{\partial}{\partial k^e_{N1,m}} & \dfrac{\partial}{\partial k^e_{N2,m}} & \cdots & \dfrac{\partial}{\partial k^e_{NN,m}} \end{bmatrix} \cdot E\left[\tilde{\tilde{e}}_m^T\ (n)\ \cdot\ \tilde{\tilde{e}}_m\ (n)\right] \overset{!}{=}\ 0. \qquad (16)$$

Auf der rechten Seite der Gleichung steht die Nullmatrix.
Durch Einsetzen von Gleichung 10 in Gleichung 16 ergibt sich nach Umformung das Folgende:

$$-\ 2\ \cdot\ E\left[\tilde{\tilde{e}}_{m-1}\ (n)\ \cdot\ \tilde{\tilde{r}}_{m-1}^T\ (n-1)\right]\ +\ 2\ \cdot\ K^e_m\ \cdot\ E\left[\tilde{\tilde{r}}_{m-1}\ (n-1)\ \cdot\ \tilde{\tilde{r}}_{m-1}^T\ (n-1)\right]\ \overset{!}{=}\ 0 \qquad (17)$$

Die Vektorprodukte innerhalb der Erwartungswerte stellen jeweils dyadische Produkte dar, so daß sich erneut Matrizen ergeben. Gleichung 17 ist also wieder eine Matrixgleichung. Aufgelöst nach $K_m^e$ ergibt sich dann:

$$K^e_m\ =\ E\left[\tilde{\tilde{e}}_{m-1}\ (n)\ \cdot\ \tilde{\tilde{r}}_{m-1}^T\ (n-1)\right]\ \cdot\ \left(E\left[\tilde{\tilde{r}}_{m-1}\ (n-1)\ \cdot\ \tilde{\tilde{r}}_{m-1}^T\ (n-1)\right]\right)^{-1} \qquad (18)$$

entsprechend gilt für $K_m^r$:

$$K_m^r = E\left[\tilde{\tilde{r}}_{m-l}(n-l) \cdot \tilde{\tilde{e}}_{m-l}^T(n)\right] \cdot \left(E\left[\tilde{\tilde{e}}_{m-l}(n) \cdot \tilde{\tilde{e}}_{m-l}^T(n)\right]\right)^{-l} \tag{19}$$

bzw.

$$K_m^r = \left(E\left[\tilde{\tilde{e}}_{m-l}(n) \cdot \tilde{\tilde{r}}_{m-l}^T(n-l)\right]\right)^T \cdot \left(E\left[\tilde{\tilde{e}}_{m-l}(n) \cdot \tilde{\tilde{e}}_{m-l}^T(n)\right]\right)^{-l} \tag{20}$$

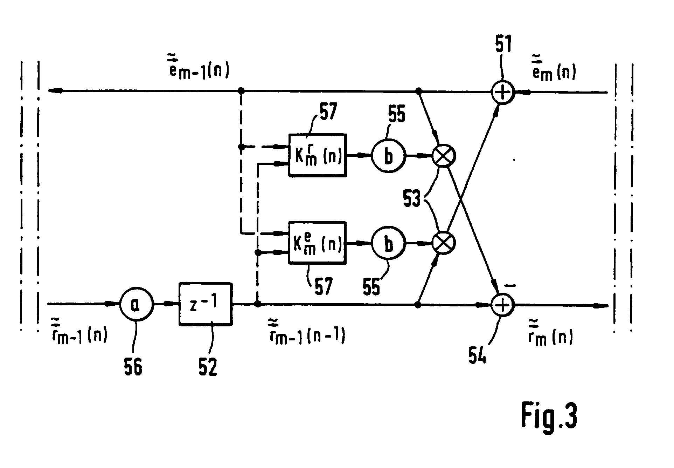

Die m-te Stufe des N-Kanal-Prädiktors 43 ist in Figur 3 näher dargestellt. Gleiche Bezugszahlen bezeichnen in Figur 3 die gleichen Komponenten, wie schon im Zusammenhang mit Figur 2 erläutet. Zusätzlich dargestellt sind die Adaptionsnetzwerke 57. Diese beziehen ihre Eingangssignale, wie gestrichelt dargestellt, einzig und allein von Signalen, die auch in der gleichen Stufe zur Verfügung stehen. Wie die Adaption im einzelnen vonstatten geht, wird nachfolgend im Zusammenhang mit einem weiteren Ausführungsbeispiel näher erläutert. Mit der Bezugszahl 55 ist zusätzlich eine Dämpfungskonstante b bezeichnet. Auch diese Dämpfungskonstante wird der Multiplikationsstelle 53 zugeführt. Zu beachten ist, daß die Dämpfungskonstante ebenfalls als Matrix formuliert ist. Den Multiplikationsstellen 53 werden dann die Matizen der Reflexionskoeffizienten $K_m^r$, $X_m^e$ mit den Matrizen der Dämpfungskonstanten b und dem entsprechenden Eingangsvektor $\tilde{e}_{m-1}(n)$, $\tilde{r}_{m-1}(n)$ multipliziert. Auch vor der Verzögerungsstufe 52 ist mit der Bezugszahl 56 eine Matrix für eine Dämpfungskonstante a bezeichnet. Zu den Matrizen der Dämpfungskonstanten a und b ist noch zu sagen, daß diese daraus hervorgehen, daß die Einheitsmatrix mit einer einfachen Dämpfungskonstanten z. B. dem Zahlenwert 0,85 multipliziert werden. Die Matrizen der Dämpfungskonstanten a und b besitzen also nur auf der Diagonalen von Null verschiedene Werte.

Nachfolgend wird der konkrete Fall einer zweikanaligen Stereo-Signal-Verarbeitung und die dazugehörige mathematische Darstellung näher erläutert.

Für den Fall der Stereo-Prädiktion (N=2) ergibt sich mit $\tilde{\tilde{e}}_{m-l}(n) = \begin{bmatrix} \tilde{e}_{x,m-l}(n) \\ \tilde{e}_{y,m-l}(n) \end{bmatrix}$ und der Kurzform

$$\tilde{\tilde{e}}_{m-l}(n) = \begin{bmatrix} \tilde{e}_x \\ \tilde{e}_y \end{bmatrix} \quad \text{sowie} \quad \tilde{\tilde{r}}_{m-l}(n-l) = \begin{bmatrix} \tilde{r}_{x,m-l}(n-l) \\ \tilde{r}_{y,m-l}(n-l) \end{bmatrix} \quad \text{und der Kurzform} \quad \tilde{\tilde{r}}_{m-l}(n-l) = \begin{bmatrix} \tilde{r}_x \\ \tilde{r}_y \end{bmatrix}$$

$$K_m^e = \begin{bmatrix} E[\tilde{e}_x \ \tilde{r}_x] & E[\tilde{e}_x \ \tilde{r}_y] \\ E[\tilde{e}_y \ \tilde{r}_x] & E[\tilde{e}_y \ \tilde{r}_y] \end{bmatrix} \cdot \begin{bmatrix} E[\tilde{r}_x \ \tilde{r}_x] & E[\tilde{r}_x \ \tilde{r}_y] \\ E[\tilde{r}_y \ \tilde{r}_x] & E[\tilde{r}_y \ \tilde{r}_y] \end{bmatrix}^{-l}$$

$$K_m^e = \frac{1}{E[\tilde{r}_x \ \tilde{r}_x] \ E[\tilde{r}_y \ \tilde{r}_y] - E^2[\tilde{r}_x \ \tilde{r}_y]} \begin{bmatrix} E[\tilde{e}_x \ \tilde{r}_x] & E[\tilde{e}_x \ \tilde{r}_y] \\ E[\tilde{e}_y \ \tilde{r}_x] & E[\tilde{e}_y \ \tilde{r}_y] \end{bmatrix} \begin{bmatrix} E[\tilde{r}_y \ \tilde{r}_y] & -E[\tilde{r}_x \ \tilde{r}_y] \\ -E[\tilde{r}_x \ \tilde{r}_y] & E[\tilde{r}_x \ \tilde{r}_x] \end{bmatrix} \tag{21}$$

und

$$K_m^r = \begin{bmatrix} E[\bar{e}_x \ \bar{r}_x] & E[\bar{e}_x \ \bar{r}_y] \\ E[\bar{e}_y \ \bar{r}_x] & E[\bar{e}_y \ \bar{r}_y] \end{bmatrix}^T \cdot \begin{bmatrix} E[\bar{e}_x \ \bar{e}_x] & E[\bar{e}_x \ \bar{e}_y] \\ E[\bar{e}_y \ \bar{e}_x] & E[\bar{e}_y \ \bar{e}_y] \end{bmatrix}^{-1}$$

$$K_m^r = \frac{1}{E[\bar{e}_x \ \bar{e}_x] \ E[\bar{e}_y \ \bar{e}_y] - E^2[\bar{e}_x \ \bar{e}_y]} \begin{bmatrix} E[\bar{e}_x \ \bar{r}_x] & E[\bar{e}_y \ \bar{r}_x] \\ E[\bar{e}_x \ \bar{r}_y] & E[\bar{e}_y \ \bar{r}_y] \end{bmatrix} \begin{bmatrix} E[\bar{e}_y \ \bar{e}_y] & -E[\bar{e}_x \ \bar{e}_y] \\ -E[\bar{e}_x \ \bar{e}_y] & E[\bar{e}_x \ \bar{e}_x] \end{bmatrix} \qquad (22)$$

Für die einzelnen Koeffizienten der Matrizen gilt dann

$$k_{xx,m}^e = \frac{E[\bar{e}_x \cdot \bar{r}_x] \cdot E[\bar{r}_y \cdot \bar{r}_y] - E[\bar{e}_x \cdot \bar{r}_y] \cdot E[\bar{r}_x \cdot \bar{r}_y]}{E[\bar{r}_x \cdot \bar{r}_x] \cdot E[\bar{r}_y \cdot \bar{r}_y] - E^2[\bar{r}_x \cdot \bar{r}_y]} \qquad k_{xy,m}^e = \frac{E[\bar{e}_x \cdot \bar{r}_y] \cdot E[\bar{r}_x \cdot \bar{r}_x] - E[\bar{e}_x \cdot \bar{r}_x] \cdot E[\bar{r}_x \cdot \bar{r}_y]}{E[\bar{r}_x \cdot \bar{r}_x] \cdot E[\bar{r}_y \cdot \bar{r}_y] - E^2[\bar{r}_x \cdot \bar{r}_y]}$$

$$k_{yx,m}^e = \frac{E[\bar{e}_y \cdot \bar{r}_x] \cdot E[\bar{r}_y \cdot \bar{r}_y] - E[\bar{e}_y \cdot \bar{r}_y] \cdot E[\bar{r}_x \cdot \bar{r}_y]}{E[\bar{r}_x \cdot \bar{r}_x] \cdot E[\bar{r}_y \cdot \bar{r}_y] - E^2[\bar{r}_x \cdot \bar{r}_y]} \qquad k_{yy,m}^e = \frac{E[\bar{e}_y \cdot \bar{r}_y] \cdot E[\bar{r}_x \cdot \bar{r}_x] - E[\bar{e}_y \cdot \bar{r}_x] \cdot E[\bar{r}_x \cdot \bar{r}_y]}{E[\bar{r}_x \cdot \bar{r}_x] \cdot E[\bar{r}_y \cdot \bar{r}_y] - E^2[\bar{r}_x \cdot \bar{r}_y]}$$

$$k_{xx,m}^r = \frac{E[\bar{e}_x \cdot \bar{r}_x] \cdot E[\bar{e}_y \cdot \bar{e}_y] - E[\bar{e}_y \cdot \bar{r}_x] \cdot E[\bar{e}_x \cdot \bar{e}_y]}{E[\bar{e}_x \cdot \bar{e}_x] \cdot E[\bar{e}_y \cdot \bar{e}_y] - E^2[\bar{e}_x \cdot \bar{e}_y]} \qquad k_{xy,m}^r = \frac{E[\bar{e}_y \cdot \bar{r}_x] \cdot E[\bar{e}_x \cdot \bar{e}_x] - E[\bar{e}_x \cdot \bar{r}_x] \cdot E[\bar{e}_x \cdot \bar{e}_y]}{E[\bar{e}_x \cdot \bar{e}_x] \cdot E[\bar{e}_y \cdot \bar{e}_y] - E^2[\bar{e}_x \cdot \bar{e}_y]}$$

$$k_{yx,m}^r = \frac{E[\bar{e}_x \cdot \bar{r}_y] \cdot E[\bar{e}_y \cdot \bar{e}_y] - E[\bar{e}_y \cdot \bar{r}_y] \cdot E[\bar{e}_x \cdot \bar{e}_y]}{E[\bar{e}_x \cdot \bar{e}_x] \cdot E[\bar{e}_y \cdot \bar{e}_y] - E^2[\bar{e}_x \cdot \bar{e}_y]} \qquad k_{yy,m}^r = \frac{E[\bar{e}_y \cdot \bar{r}_y] \cdot E[\bar{e}_x \cdot \bar{e}_x] - E[\bar{e}_x \cdot \bar{r}_y] \cdot E[\bar{e}_x \cdot \bar{e}_y]}{E[\bar{e}_x \cdot \bar{e}_x] \cdot E[\bar{e}_y \cdot \bar{e}_y] - E^2[\bar{e}_x \cdot \bar{e}_y]}$$

$$(23)$$

Für die Adaption der Koeffizienten in Gleichung 23 an die momentanen Signaleigenschaften werden die zur Optimierung herangezogenen Erwartungswerte in den Gleichungen 21 bis 23 durch gemessene zeitliche Mittelwerte über eine begrenzte Signalvergangenheit ersetzt. Als begrenzte Signalvergangenheit kann z.B. bei einer Stereosignal-Verarbeitung der Signalverlauf während einigen ms bis 100 ms zur Mittelwertbildung betrachtet werden. Es ist ein Kompromiß zu schließen zwischen guter Konvergenz gegen die optimale Prädiktoreinstellung in Signalabschnitten mit quasistationärem Signalcharakter und der Fähigkeit schneller Anpassung an geänderte Signaleigenschaften im Sinne einer Kurzzeitstatistik. In diesem Zusammenhang sind Algorithmen, bei denen die Schätzwerte der benötigten Parameter iterativ, d.h. von Abtastwert zu Abtastwert verbessert werden, anwendbar. Als Beispiel solcher Algorithmen werden die aus dem Stand der Technik bereits bekannten Algorithmen LMS (least mean square) oder RLS (recursive least mean square) genannt. Diese Algorithmen sind ebenfalls aus dem Buch von P. Strohbach "Linear Prediction Theory", Springer-Verlag, 1990 bekannt.

Im folgenden wird die Adaption der Koeffizienten $k_{xy,m}^e$ und $k_{xy,m}^r$ für das Beispiel des LMS-Algorithmus erläutert. Die Erwartungswerte werden wie folgt durch erwartungstreue Schätzwerte ersetzt, die rekursiv berechnet werden können:

$$E\left[\tilde{e}_{x,m-1}\,(n)\cdot\tilde{r}_{y,m-1}\,(n-1)\right]\;\rightarrow\;C_{xy,m}\,(n)$$

$$E\left[\tilde{e}_{x,m-1}\,(n)\cdot\tilde{e}_{y,m-1}\,(n)\right]\;\rightarrow\;D^{e}_{xy,m}\,(n)$$

$$E\left[\tilde{r}_{x,m-1}\,(n-1)\cdot\tilde{r}_{y,m-1}\,(n-1)\right]\;\rightarrow\;D^{r}_{xy,m}\,(n) \tag{24}$$

Mit

$$C_{xy,m}\,(n)\;=\;(1-\beta)\cdot C_{xy,m}\,(n-1)+\beta\cdot\tilde{e}_{x,m-1}\,(n)\cdot\tilde{r}_{y,m-1}\,(n-1)$$

$$D^{e}_{xy,m}\,(n)\;=\;(1-\beta)\cdot D^{e}_{xy,m}\,(n-1)+\beta\cdot\tilde{e}_{x,m-1}\,(n)\cdot\tilde{e}_{y,m-1}\,(n)$$

$$D^{r}_{xy,m}\,(n)\;=\;(1-\beta)\cdot D^{r}_{xy,m}\,(n-1)+\beta\cdot\tilde{r}_{x,m-1}\,(n-1)\cdot\tilde{r}_{y,m-1}\,(n-1) \tag{25}$$

Dabei ist $\beta$ eine Adaptionszeitkonstante, die den Einfluß der momentanen Abtastwerten auf die Schätzung der Erwartungswerte bestimmt. Sie sollte insbesondere in Abhängigkeit von der Abtastfrequenz des jeweiligen Prädiktoreincanassianals optimiert werden, was in der Regel für einen bestimmten Codieralgothimus experimentell erfolgen kann. Damit ergeben sich dann folgende Bestimmungsgleichungen für die genannten Reflexionskoeffizienten:

$$k^{e}_{xy,m}\;=\;\frac{C_{xy,m}\,(n)\cdot D^{r}_{xx,m}\,(n)-C_{xx,m}\,(n)\cdot D^{r}_{xy,m}\,(n)}{D^{r}_{xx,m}\,(n)\cdot D^{r}_{yy,m}\,(n)-\left(D^{r}_{xy,m}\,(n)\right)^{2}} \tag{26}$$

$$k^{r}_{xy,m}\;=\;\frac{C_{yx,m}\,(n)\cdot D^{e}_{xx,m}\,(n)-C_{xx,m}\,(n)\cdot D^{e}_{xy,m}\,(n)}{D^{e}_{xx,m}\,(n)\cdot D^{e}_{yy,m}\,(n)-\left(D^{e}_{xy,m}\,(n)\right)^{2}}\cdot\;, \tag{27}$$

Die Größen $C_{xx,m}(n)$, $D^{e}_{xx,m}(n)$ und $D^{r}_{xx,m}(n)$ ergeben sich ganz entsprechend, wie bei den Gleichungen 24 und 25. Für die restlichen Koeffizienten folgen entsprechende Berechnungsvorschriften. Diese werden im einzelnen nicht näher aufgeführt. Die sich so ergebeneden Berechnungsvorschriften, werden in jeder Prädiktorstufe, wie in Bild 3 dargestellt, durch die Adaptionsnetzwerke 57 realisiert. Hierfür kann ein entsprechend programmierter Mikrorechner eingesetzt werden. Die optimalen Werte der Dämpfunaskonstanten a und b können ebenfalls experimentell ermittelt werden. Durch sie wird gewährleistet, daß der Einfluß von Übertragungsfehlern schneller abgebaut wird.

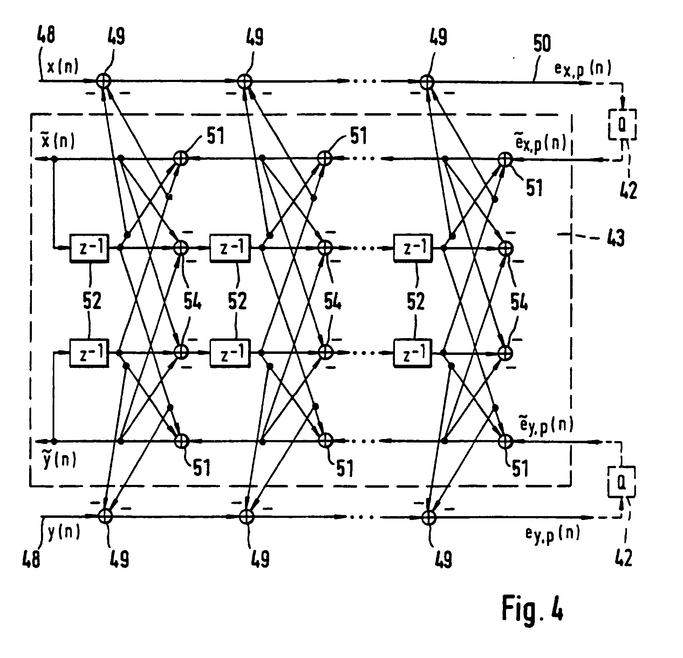

Bild 4 zeigt jetzt die vereinfachte Darstellung eines zweikanaligen Stereo-Prädiktors der Ordnung P in rückwärtsadaptiver Kreuzgliedstruktur. Die beiden Kanäle sind einzeln dargestellt und mit x(n) und y(n) bezeichnet. Gleiche Bezugszahlen in Figur 4, wie in den Figuren 1, 2 und 3, bezeichnen jeweils die gleichen Komponenten, wie schon zu den Figuren 1, 2 und 3 erläutert. Sie werden deshalb hier nicht nochmal näher erläutert. Zur besseren Übersichtlichkeit ist auf die Darstellung der Multiplikation mit den Reflexionskoeffizienten sowie der zugehörigen Adaptionsnetzwerke und Dämpfungskonstanten verzichtet worden. Zur vollständigen Darstellung müssen diese, wie in Bild 3 dargetellt, hinzugefügt werden.

Für die Rekursionsgleichungen der Kreuzgliedstruktur gelten in diesem Fall die folgenden Formeln:

$$\bar{\tilde{e}}_m(n) = \bar{\tilde{e}}_{m-1}(n) - K_m^e \cdot \bar{\tilde{r}}_{m-1}(n-1)$$

$$\begin{bmatrix} \tilde{e}_{x,m}(n) \\ \tilde{e}_{y,m}(n) \end{bmatrix} = \begin{bmatrix} \tilde{e}_{x,m-1}(n) \\ \tilde{e}_{y,m-1}(n) \end{bmatrix} - \begin{bmatrix} k_{xx,m}^e(n) & k_{xy,m}^e(n) \\ k_{yx,m}^e(n) & k_{yy,m}^e(n) \end{bmatrix} \cdot \begin{bmatrix} \tilde{r}_{x,m-1}(n-1) \\ \tilde{r}_{y,m-1}(n-1) \end{bmatrix} \qquad (28)$$

$$\tilde{e}_{x,m}(n) = \tilde{e}_{x,m-1}(n) - k_{xx,m}^e(n) \cdot \tilde{r}_{x,m-1}(n-1) - k_{xy,m}^e(n) \cdot \tilde{r}_{y,m-1}(n-1)$$

$$\tilde{e}_{y,m}(n) = \tilde{e}_{y,m-1}(n) - k_{yx,m}^e(n) \cdot \tilde{r}_{x,m-1}(n-1) - k_{yy,m}^e(n) \cdot \tilde{r}_{y,m-1}(n-1)$$

und

$$\bar{\tilde{r}}_m(n) = \bar{\tilde{r}}_{m-1}(n-1) - K_m^r \cdot \bar{\tilde{e}}_{m-1}(n)$$

$$\begin{bmatrix} \tilde{r}_{x,m}(n) \\ \tilde{r}_{y,m}(n) \end{bmatrix} = \begin{bmatrix} \tilde{r}_{x,m-1}(n-1) \\ r_{y,m-1}(n-1) \end{bmatrix} - \begin{bmatrix} k_{xx,m}^r(n) & k_{xy,m}^r(n) \\ k_{yx,m}^r(n) & k_{yy,m}^r(n) \end{bmatrix} \cdot \begin{bmatrix} \tilde{e}_{x,m-1}(n) \\ \tilde{e}_{y,m-1}(n) \end{bmatrix} \qquad (29)$$

$$\tilde{r}_{x,m}(n) = \tilde{r}_{x,m-1}(n-1) - k_{xx,m}^r(n) \cdot \tilde{e}_{x,m-1}(n) - k_{xy,m}^r(n) \cdot \tilde{e}_{y,m-1}(n)$$

$$\tilde{r}_{y,m}(n) = \tilde{r}_{y,m-1}(n-1) - k_{yx,m}^r(n) \cdot \tilde{e}_{x,m-1}(n) - k_{yy,m}^r(n) \cdot \tilde{e}_{y,m-1}(n)$$

dabei werden die Reflexionskoeffizienten der Matrix $K_m^e$ und $K_m^r$ so berechnet, wie im Zusammenhang mit den Gleichungen 26 und 27 erläutert.

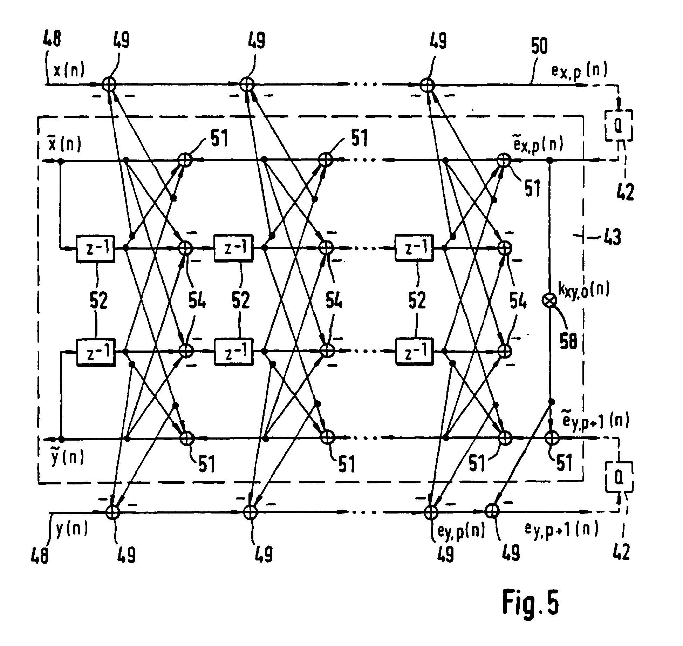

In der in Figur 4 dargestellten Stuktur eines zweikanaligen, rückwärtsadaptiven Stereo-Prädiktors werden die Korrelationen zwischen zeitgleichen Abtastwerten der beiden Kanäle x und y nicht berücksichtigt. Um auch diese Korrelation noch zu berücksichtigen, wird vorgeschlagen, einen Inter-Kanal-Prädiktor nullter Ordnung nachzuschalten, wie in Figur 5 dargestellt. An der Multiplikationsstelle 58 wird das vom Quantisierer 42, der dem X-Kanal zugeordnet ist, abgegebene Signal mit dem Koeffizienten $k_{xy,0}(n)$ multipliziert. Das Ergebnis der Multiplikation wird dann, wie durch die Pfeile angegeben, an den Summationsstellen 51 und 49 zu den entsprechend angegebenen Eingangswerten addiert. Die Berechnungsformel für den Inter-Kanal-Prädiktor lautet wie folgt:

$$\tilde{e}_{y,P+1}(n) = \tilde{e}_{y,P}(n) - k_{xy,0}(n) \cdot \tilde{e}_{x,P}(n). \tag{30}$$

Die Berechnung des Koeffizienten $k_{xy,0}(n)$ folgt aus der Minimierung der Fehlerleistung für das quantisierte Prädiktionsfehlersignal $e_{y,P+1}(n)$.

$$E\left[\tilde{e}_{y,P+1}^{2}(n)\right] = E\left[\left(\tilde{e}_{y,P}(n) - k_{xy,0}(n) \cdot \tilde{e}_{x,P}(n)\right)^{2}\right] \rightarrow min. \tag{31}$$

Die Minimierung, wie in Gleichung 31 angegeben, geschieht durch nullsetzen der Ableitung der Fehlerleistung nach $k_{xy,0}(n)$.

$$\frac{\partial}{\partial k_{xy,0}(n)} E\left[\tilde{e}_{y,P+1}^{2}(n)\right] = E\left[2 \cdot \tilde{e}_{y,P+1}(n) \cdot \left(- \tilde{e}_{x,P}(n)\right)\right] \overset{!}{=} 0$$

liefert

$$E\left[-2 \cdot \left(\tilde{e}_{y,P}(n) - k_{xy,0}(n) \cdot \tilde{e}_{x,P}(n)\right) \cdot \tilde{e}_{x,P}(n)\right] \overset{!}{=} 0,$$

also

$$k_{xy,0}(n) \cdot E\left[\tilde{e}_{x,P}^{2}(n)\right] = E\left[\tilde{e}_{y,P}(n) \cdot \tilde{e}_{x,P}(n)\right]$$

$$k_{xy,0}(n) = \frac{E\left[\tilde{e}_{y,P}(n) \cdot \tilde{e}_{x,P}(n)\right]}{E\left[\tilde{e}_{x,P}^{2}(n)\right]} \tag{32}$$

Diese Gleichungen können für den N-Kanal-Fall entsprechend abgeleitet werden.
Im folgenden wird noch genauer auf eine konkrete Realisierung einer Signalcodierung mit dem erfindungsgemäßen N-Kanal-Prädiktor eingegangen. Im Bild 6 bezeichnet die Bezugszahl 48 wieder einen Eingang eines Encoders. Hier steht das N-Kanal-Eingangssignal $\vec{x}(n)$ an. Das Signal $\vec{x}(n)$ enthält die digitalisierten Abtastwerte zum Abtastzeitpunkt n. Mit der Bezugszahl 59 ist dann eine Filterbank bezeichnet. Diese besteht aus einer Anzahl von digitalen Bandpaßfiltern zur Zerlegung des anstehenden Signals in verschiedene Spektralkomponenten. Im Fall der Codierung von Stereo-Tonsignalen wird z.B. in dem bekannten Standard International Standard ISO/IEC, "International Standard IS 11172:

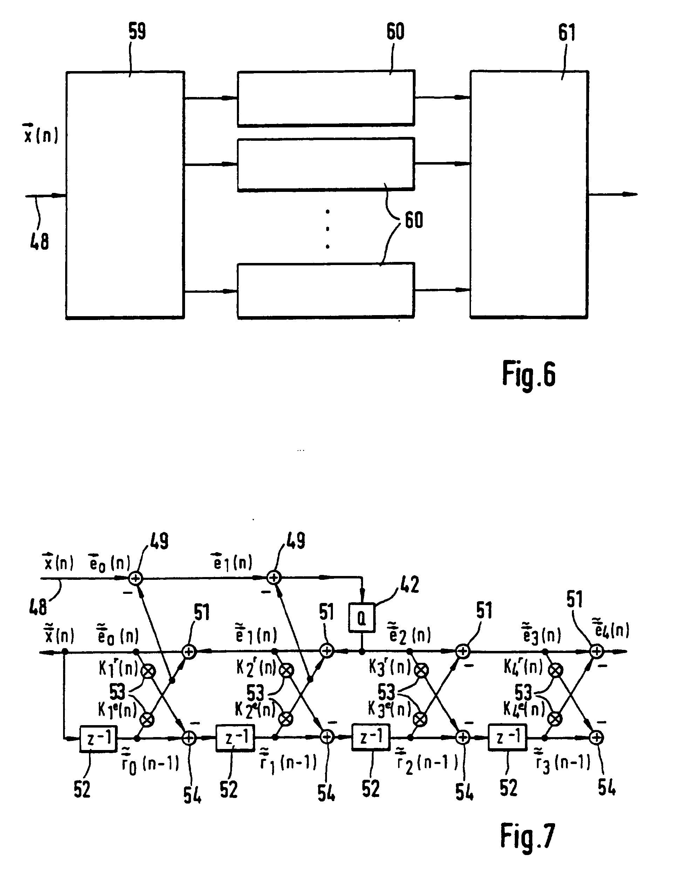

Information technology - coding of moving pictures and associated audio for digital storage media at up to about 1.5 Mbit/s", ISO/IEC JTC1/SC29, Genf, August 1993, der auch als MPG/Audiostandard bezeichnet wird, für den Layer 2 vorgeschlagen, das Spektrum der Audiosignale von 0 bis 24 kHz in 32 gleichbreite Teilbänder zu zerlegen. Mit den Bezugszahlen 60 sind in Figur 6 entsprechend viele Encoder-Schaltungen bezeichnet, die jeweils einen Prädiktor und Quantisierer entfalten, wie in Figur 1 dargestellt. Mit der Bezugszahl 61 ist ein Schaltkreis bezeichnet, in dem schließlich nach dem bekannten Verfahren eine Codierung der ermittelten quantisierten Prädiktionsfehlersignale stattfindet, sowie auch die Bitstromerzeugung mit der entsprechenden Blockbildung. Die Funktion dieser Schaltung ist aber in der genannten ISO-Norm ausführlich beschrieben. Für die Optimierung der Anordnung gemäß Bild 6 ist es vorteilhaft, wenn jeder einzelne Prädiktor individuell gesteuert werden kann. Bei rückwärtsadaptiven Systemen kann es ggf. kurzzeitig zu Prädiktionsverlusten kommen, z.B. wenn sich die Signalstatistik aufgrund eines Signalwechsels ändert. In diesem Fall sollten die Originalabtastwerte übertragen werden, da sich der Prädiktor neu adaptieren muß. Daher sollten die Prädiktoren einzeln oder gruppenweise abschaltbar sein, d.h. nur dann aktiv sein, wenn sich auch ein Prädiktionsgewinn erzielen läßt. Darüberhinaus kann es aber auch vorteilhaft sein, die Prädiktorlänge, also die Anzahl der Prädiktorbasisstufen umzuschalten. So kann es vorkommen, daß ein Prädiktor bei Erhöhung der Prädiktorlänge instabil wird. Im Encoder kann dies überprüft und auf eine geringere Prädiktorlänge zurückgeschaltet werden. Dies erfordert dann einen zusätzlichen Steueraufwand im Encoder sowie die Übertragung der entsprechenden Steuerparameter als Seiteninformation im Bitstrom deren Ausmaß aber gering sein bleibt.

Anstelle der Filterbank könnte in Figur 6 auch eine Recheneinheit, die eine Transformation, z.B. eine Diskrete Fourier- oder eine Diskrete Cosinus-Transformation durchführt eingesetzt werden. Die Spektralkomponenten sind dann die Transformacionskoeffizienten. Für jede Folge von Transformationskoeffizienten muß dann jeweils ein Prädiktor verwendet werden.

Ein Problem bei der Ab- bzw. Umschaltung eines Prädiktors liegt in der Tatsache, daß sich der komplette Prädiktor bzw. die abgeschalteten höheren Stufen bei Wiedereinschalten neu adaptieren müssen, was zu reduzierten Prädiktionsgewinnen führt. Um dieses Problem zu beheben wird die in Figur 7 dargestellte Schaltung vorgeschlagen. Auch in dieser Schaltung bezeichnen gleiche Bezugszeichen das Gleiche, wie in den Figuren 1 bis 6. Wesentlich ist, daß der Prädiktor in Figur 7 als zweistufiger, rückwärtsadaptiver Prädiktor geschaltet ist. Die restlichen beiden Stufen des Prädiktors werden dann bei der dargestellten Schaltung in Vorwärtsrichtung (Feed forward) rückwärtsadaptiv betrieben. Dies erlaubt eine ständige Adaption aller Koeffizienten des Prädiktors unabhängig davon, ob der Prädiktor abgeschaltet oder mit einer kleineren als der maximal möglichen Prädiktorlänge betrieben wird.

Im allgemeinen N-Kanal-Fall nimmt die Anzahl der zu berechnenden Koeffizienten je Stufe aufgrund der quadratischen Abhängigkeit mit wachsendem Wert N schnell große Werte an, so daß es u. U., insbesondere im Hinblick auf eine praktische Realisierung, vorteilhaft sein kann, die N-Kanäle in Untergruppen $N = N_1 + N_2 + ...$ aufzuteilen und dann $N_1$-Kanal, $N_2$-Kanal, ... Prädiktoren zu verwenden. Für den in der Praxis heute bedeutsamen Fall N = 5, wo es drei Frontkanäle (Links Mitte Rechts) und zwei Surroundkanäle (Links-Surround, Rechts-Surround) gibt, ist beispielsweise eine entsprechende Aufteilung in einen 3-Kanal-Prädiktor für die Frontkanäle und einen 2-Kanal-Prädiktor für die Surroundkanäle möglich. Hierdurch wird dann die Anzahl der je Stufe zu berechnenden Koeffizienten von 2 x 25 = 50 auf 2 x 4 + 2 x 9 = 26 reduziert.

Die hier vorgestellten, linearen rückwärtsadaptiven N-Kanal-Prädiktoren können vielfältig eingesetzt werden. So sind Anwendungen z.B. bei der Übertragung von Eild-, bzw. TonSignalen über das ISDN-Netz denkbar. Andere Anwendungen betreffen z.E. die Übertragung von digitalen Tonsignalen mit Hilfe des Digital Audio Broadcastings (DAB). Auch bei der Übertragung von Daten über Computernetze, insbesondere bei Multimedia-Anwendungen sind die Prädiktoren einsetzbar.

Erste Arbeiten befaßten sich mit der Integration dieser Prädiktoren in einen Audiocodec. Dabei wurden die Prädiktoren sowohl in der ISO MPEG Layer 2 als auch in der ISO MPEG Layer 3 integriert. Der ISO MPEG Layer 2 Codec basiert auf einer Teilbandzerlegung mit 32 gleich breiten Teilbändern der Breite 750 Hz mit der Teilbandabtastfrequenz von 1,5 kHz. Für jedes Stereo-Teilband wird ein in der Prädiktorlänge umschaltbarer bzw. abschaltbarer rückwärtsadaptiver Stereo-Prädiktor verwendet. Bei diesem Codec werden jeweils Blöcke zu 36 Teilbandabtastwerten in jedem Kanal skaliert, quantisiert und codiert. Für die rückwärtsadaptive Prädiktion muß die Quantisierung für einen Block bereits zu Beginn des Blocks bekannt sein. Da diese wiederum von den Prädiktionsfehlerwerten abhängt, müssen Prädiktion, Skalierung und Quantisierung iterativ vorgenommen werden. Der für die Auswahl der Quantisierer zuständige Bitallokationsalgorithmus muß so angepaßt werden, daß die Prädiktionsgewinne bei der Bitzuweisung entsprechend berücksichtigt werden. Mit den Werten $\beta = 2^{-6}$ für die Adaptionszeitkonstante sowie $a = 1-2\beta$ und $b = 1-\beta$ für die Dämpfungskonstanten konnten für die bisher kritischsten Testsignale bei Codierung mit einer Datenrate von 2 · 64 = 128 kbit/s mittlere Codierungsgewinne gegenüber dem Layer 2 ohne Prädiktion im Bereich von 45 bis 60 kbit/s gemessen werden. Die subjektive Tonqualität wurde deutlich verbessert.

Der ISO MPEG Layer 3 Codec basiert auf einer Teilbandzerlegung mit nachgeschalteter Transformation, deren Ausgang 576 Spektralkoeffizienten liefert. Der zeitliche Abstand aufeinanderfolgender Koeffizienten beträgt 12 ms, was einer "Teilbandabtastfrequenz" von etwa 83 Hz entspricht. Für die Codierung werden die 576 Spektralkoeffizienten zu sogenannten Skalenfaktorbändern zusammengefaßt, deren Bandbreiten näherungsweise den Frequenzgruppen des Gehörs entsprechen.

Für jede Folge von Stereo-Koeffizienten wird ein rückwärtsadaptiver Stereo-Prädiktor verwendet, insgesamt also 576 Prädiktoren, die Skalenfaktorbandweise abgeschaltet werden können. Im Fall von Signalwechseln wird die Frequenzauflösung im Layer 3 Codec auf 192 Spektralkoeffizienten reduziert. Die Prädiktion wird hier abgeschaltet und erst beim Übergang auf 576 Koeffizienten wieder aktiviert. Die Integration der Stereo-Prädiktion in den Layer 3 ist relativ unkompliziert, da aufgrund der Verarbeitungsstruktur Koeffizient für Koeffizient quantisiert wird. Mit den Werten β = 0.1 für die Adaptionszeitkonstante sowie a = b = 0.85 für die Dämpfungskonstanten konnten für die bisher kritischsten Testsignal bei Codierung mit einer Datenrate von 2 x 64 = 128 kbit/s mittlere Codierungsgewinne gegenüber dem Layer 3 ohne Prädiktion im Bereich von 25 bis 35 kbit/s gemessen werden. Die geringeren Codierungsgewinne im Vergleich zu Layer 2 erklären sich daraus, daß der Layer 3 gegenüber Layer 2 eine größere Codiereffizienz aufweist. Auch hier konnte die subjektive Tonqualität verbessert werden.

## Patentansprüche

1. Verfahren zur Redundanzreduktion bei der Codierung von mehrkanaligen Signalen, die bereits in digitalisierter Form vorliegen, wobei die digitalisierten Signale prädiziert werden, wobei ein Prädiktionsfehler zwischen den digitalisierten und prädizierten Signalen ermittelt wird, wobei die Prädiktionsfehlerwerte quantisiert werden und zur Übertragung über eine Übertragungsstrecke bereitgestellt werden, wobei die Prädiktion linear und rückwärtsadaptiv sowie mehrstufig für mindestens zwei Kanäle gleichzeitig ausgeführt wird, wobei sowohl die Statistischen Abhängigkeiten innerhalb eines Kanals als auch zwischen den Kanälen berücksichtigt werden, wobei in jeder Stufe ein Anteil berechnet wird, der von dem jeweiligen, an einem Kanal anstehenden Digitalwert, abgezogen wird, wobei für jede Stufe bei der Prädiktion eine Kreuzgliedstruktur verwendet wird, wobei einzelne oder mehrere Stufen des Prädiktors (43) abschaltbar ausgebildet sind, so dass die Prädiktion nur noch dann ausgeführt wird, wenn sich ein Prädiktionsgewinn erzielen lässt, wobei unabhängig davon, ob der Prädiktor (43) abgeschaltet ist oder mit kleinerer als der maximal möglichen Prädiktorlänge betrieben wird, eine Adaption der Prädiktorkoeffizienten vorgenommen wird und wobei abgeschaltete Stufen bei der Prädiktion in Vorwärtsrichtung rückwärtsadaptiv betrieben werden.

2. Verfahren nach Anspruch 1, **dadurch gekennzeichnet, dass** bei der Adaption Prädiktorkoeffizienten für jede Stufe berechnet werden, wobei zur Berechnung der Prädiktorkoeffizienten eine Minimierung der Summe der Fehlersignalleistungen in den mindestens zwei Kanälen durchgeführt wird, wobei hierzu die Erwartungswerte der Signale innerhalb eines Kanals und zwischen mindestens zwei Kanälen herangezogen werden.

3. Verfahren nach Anspruch 2, **dadurch gekennzeichnet, dass** die Erwartungswerte durch gemessene zeitliche Mittelwerte über eine begrenzte Signalvergangenheit ersetzt werden.

4. Verfahren nach einem der Ansprüche 1 bis 3, **dadurch gekennzeichnet, dass** bei abgeschalteten Stufen des Prädiktors (43) die Prädiktion nur noch mit den restlichen Stufen linear und rückwärtsadaptiv ausgeführt wird.

5. Verfahren nach einem der vorhergehenden Ansprüche, **dadurch gekennzeichnet, dass** die statistischen Bindungen auch zwischen zeitgleichen Abtastwerten der mindestens zwei Kanäle berücksichtigt werden, wozu insbesondere ein nachgeschalteter Inter-Kanal-Prädiktor (58, 51) nullter Ordnung eingesetzt wird.

6. Verfahren nach einem der vorhergehenden Ansprüche, **dadurch gekennzeichnet, dass** eine spektrale Zerlegung der mehrkanaligen Signale in eine Anzahl von Spektralkomponenten vorgenommen wird und dass die so entstehenden mehrkanaligen Spektralkomponenten separat codiert werden, wobei die Prädiktion jeweils separat für jede Spektralkomponente der mindestens zwei Kanäle durchgeführt wird.

7. Verfahren nach einem der vorhergehenden Ansprüche, **dadurch gekennzeichnet, dass** die mehrkanaligen Signale aus Bild- und/oder Tonsignalen bestehen.

8. Vorrichtung zur Decodierung von nach einem Verfahren nach einem der vorhergehenden Ansprüche redundanzreduzierten mehrkanaligen Signalen, wobei der Vorrichtung quantisierte Prädiktionsfehlerwerte zugeführt werden, mit folgenden Merkmalen:

    - einem linearen rückwärtsadaptiven Prädiktor (43), dem die quantisierten Prädiktionsfehlerwerte ($\tilde{\tilde{e}}_P(n)$ zu-

geführt sind, wobei der Prädiktor (43) mehrstufig ausgeführt ist, und in jeder Stufe ein Anteil berechnet wird, der von dem jeweiligen, an dementsprechenden Kanal anstehenden Digitalwert, abgezogen wird,
- jede Stufe weist eine Kreuzgliedstruktur auf,
- einzelne Stufen des Prädiktors (43) sind abschaltbar ausgebildet derart, dass eine Prädiktion nur noch dann ausgeführt wird, wenn sich ein Prädiktionsgewinn erzielen lässt,
- die abgeschalteten Stufen arbeiten in Vorwärtsrichtung rückwärtsadaptiv,
- einer derartigen Ausbildung des Prädiktors, dass eine Adaption der Prädiktorkoeffizienten unabhängig davon ausführbar ist, ob der Prädiktor (43) abgeschaltet ist oder nicht.

9. Vorrichtung nach einem Anspruch 8, **dadurch gekennzeichnet, dass** der Prädiktor (43) zusätzlich einen Inter-Kanal-Prädiktor (58, 51) nullter Ordnung aufweist, der die statistischen Bindungen auch zwischen zeitgleichen Abtastwerten der mindestens zwei Kanäle berücksichtigt.

10. Vorrichtung nach einem der Ansprüche 8 oder 9, **dadurch gekennzeichnet, dass** sie für jedes mehrkanalige Teilbandsignal einen separaten Prädiktor (60) enthält, der separat abschaltbar ist.

**Claims**

1. Process for reducing redundancy during the coding of multichannel signals which are already present in digitized form, the digitized signals being predicted, a prediction error between the digitized signals and the predicted signals being determined, the prediction error values being quantized and being provided for transmission via a transmission path, the prediction being carried out in a linear and reverse-adaptive manner and in a plurality of stages for at least two channels at the same time, both the statistical dependencies inside a channel and those between the channels being taken into account, a portion which is subtracted from the respective digital value present in a channel being calculated in each stage, a crossmember structure being used for each stage during the prediction, individual stages or a plurality of stages of the predictor (43) being able to be switched off, with the result that the prediction is carried out only when a prediction gain can be achieved, the predictor coefficients being adapted irrespective of whether the predictor (43) has been switched off or is being operated with a predictor length which is shorter than the maximum possible predictor length, and stages which have been switched off being operated in a reverse-adaptive manner in the forward direction during the prediction.

2. Process according to Claim 1, **characterized in that** predictor coefficients are calculated for each stage during the adaptation, the sum of the error signal powers in the at least two channels being minimized in order to calculate the predictor coefficients, the expected values of the signals inside a channel and between at least two channels being used for this purpose.

3. Process according to Claim 2, **characterized in that** the expected values are replaced with measured temporal averages over a limited signal past.

4. Process according to one of Claims 1 to 3,
**characterized in that**, when stages of the predictor (43) are switched off, the prediction is carried out in a linear and reverse-adaptive manner only with the remaining stages.

5. Process according to one of the preceding claims, **characterized in that** the statistical relationships even between simultaneous samples of the at least two channels are taken into account, a downstream zero-order inter-channel predictor (58, 51), in particular, being used for this purpose.

6. Process according to one of the preceding claims, **characterized in that** the multichannel signals are spectrally broken down into a number of spectral components, and **in that** the multichannel spectral components produced in this manner are coded separately, the prediction respectively being carried out separately for each spectral component of the at least two channels.

7. Process according to one of the preceding claims, **characterized in that** the multichannel signals consist of image and/or sound signals.

8. Device for decoding redundancy-reduced multichannel signals in accordance with a process according to one of the preceding claims, quantized prediction error values being supplied to the device, said device having the following features:

- a linear reverse-adaptive predictor (43) which is supplied with the quantized prediction error values $(\tilde{\tilde{e}}_p(n))$, the predictor (43) having a plurality of stages, and a portion which is subtracted from the respective digital value present in the corresponding channel being calculated in each stage,
- each stage has a crossmember structure,
- individual stages of the predictor (43) can be switched off in such a manner that a prediction is carried out only when a prediction gain can be achieved,
- the stages which have been switched off operate in a reverse-adaptive manner in the forward direction,
- the predictor is designed in such a manner that the predictor coefficients can be adapted irrespective of whether or not the predictor (43) has been switched off.

**9.** Device according to Claim 8, **characterized in that** the predictor (43) additionally has a zero-order inter-channel predictor (58, 51) which takes into account the statistical relationships even between simultaneous samples of the at least two channels.

**10.** Device according to either of Claims 8 and 9, **characterized in that** it contains a separate predictor (60), which can be separately switched off, for each multichannel sub-band signal.

**Revendications**

**1.** Procédé de réduction de la redondance dans le codage de signaux transmis sur plusieurs canaux qui présentent déjà une forme numérisée,
les signaux numérisés étant prédits,
une erreur de prédiction entre les signaux numérisés et les signaux prédits étant déterminée,
les valeurs d'erreur de prédiction étant quantifiées et préparées pour être transmises sur un parcours de transmission,
la prédiction étant réalisée simultanément pour au moins deux canaux de manière linéaire et adaptative vers l'arrière ou en plusieurs étapes, tant les dépendances statistiques à l'intérieur d'un canal que celles existant entre les canaux étant prises en compte,
une partie qui est extraite de la valeur numérique présente sur un canal étant calculée dans chaque étape,
une structure d'organes croisés étant utilisée lors de la prédiction dans chaque étape,
certaines ou plusieurs étapes du prédicteur (43) étant configurées de manière à pouvoir être débranchées de telle sorte que la prédiction ne soit plus exécutée que si l'on peut obtenir un résultat de prédiction que le prédicteur (43) soit débranché ou utilisé à une longueur de prédiction inférieure à la longueur de prédiction maximale possible,
une adaptation des coefficients de prédiction étant réalisée et les étages débranchés étant utilisés avec adaptation arrière dans la direction avant lors de la prédiction.

**2.** Procédé selon la revendication 1, **caractérisé en ce que** lors de l'adaptation, les coefficients de prédiction sont calculés pour chaque étape, **en ce que** pour le calcul des coefficients de prédiction, la somme des puissances des signaux d'erreur dans les deux ou plusieurs canaux est minimisée et **en ce que** les valeurs attendues des signaux à l'intérieur d'un canal et entre au moins deux canaux sont utilisées dans ce but.

**3.** Procédé selon la revendication 2, **caractérisé en ce que** les valeurs attendues sont remplacées par des valeurs moyennes temporelles mesurées sur un passé limité des signaux.

**4.** Procédé selon l'une des revendications 1 à 3, **caractérisé en ce que** lorsque des étapes du prédicteur (43) sont débranchées, la prédiction n'est plus exécutée sur les étapes restantes que linéairement et avec adaptation arrière.

**5.** Procédé selon l'une des revendications précédentes, **caractérisé en ce que** les conditions statistiques sont également prises en compte entre des valeurs d'échantillonnage aux mêmes instants sur les deux ou plusieurs canaux et **en ce qu'**un prédicteur intercanaux (58, 51) raccordé en aval et d'ordre zéro est en particulier utilisé.

**6.** Procédé selon l'une des revendications précédentes, **caractérisé en ce que** les signaux multicanaux sont décomposés spectralement en plusieurs composantes spectrales, **en ce que** les composantes spectrales multicanaux ainsi obtenues sont codées séparément et **en ce que** la prédiction est réalisée séparément pour chaque composante spectrale des deux ou plusieurs canaux.

**7.** Procédé selon l'une des revendications précédentes, **caractérisé en ce que** les signaux multicanaux sont constitués de signaux d'image et/ou de signaux audio.

**8.** Dispositif de décodage de signaux multicanaux à redondance réduite selon l'une des revendications précédentes, le dispositif recevant des valeurs quantifiées d'erreur de prédiction, le dispositif présentant les caractéristiques suivantes :

- un prédicteur linéaire (43) à adaptation arrière auquel les valeurs quantifiées d'erreur de prédiction ($e_p(n)$) sont apportées, le prédicteur (43) étant réalisé en plusieurs étages, une partie qui est extraite de la valeur numérique particulière présente sur le canal correspondant étant calculée dans chaque étage,
- chaque étage présente une structure à organes croisés,
- certaines étages du prédicteur (43) sont configurés de manière à pouvoir être débranchés de telle sorte qu'une prédiction ne soit plus utilisée que si un résultat de prédiction peut être obtenu,
- les étages débranchés travaillent en adaptation arrière dans la direction avant et
- le prédicteur est configuré de telle sorte que l'adaptation des coefficients de prédiction peut être réalisée que le prédicteur (43) soit débranché ou non.

**9.** Dispositif selon la revendication 8, **caractérisé en ce que** le prédicteur (43) présente en outre un prédicteur intercanaux (58, 51) d'ordre zéro qui tient compte des liaisons statistiques entre des valeurs d'échantillonnage prises au même instant sur les deux ou plusieurs canaux.

**10.** Dispositif selon l'une des revendications 8 ou 9, **caractérisé en ce qu'**il contient pour chaque signal multicanal de bande partielle un prédicteur séparé (60) qui peut être débranché séparément.

Fig.1

Fig.2

Fig.3

Fig. 4

Fig. 5

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4320990 A1
- US 4815132 A

- WO 9016136 A

**In der Beschreibung aufgeführte Nicht-Patentliteratur**

- **P. Strohbach.** Linear Prediction Theory. Springer-Verlag, 1990, 158-178